(19) Europäisches Patentamt / European Patent Office / Office européen des brevets

(11) **EP 3 938 074 B1**

(12) **EUROPÄISCHE PATENTSCHRIFT**

(45) Veröffentlichungstag und Bekanntmachung des Hinweises auf die Patenterteilung:
**09.08.2023 Patentblatt 2023/32**

(21) Anmeldenummer: **20711871.2**

(22) Anmeldetag: **13.03.2020**

(51) Internationale Patentklassifikation (IPC):
*B01D 37/02* (2006.01)   *C02F 1/00* (2023.01)
*C02F 1/68* (2023.01)   *C02F 1/28* (2023.01)
*C02F 1/42* (2023.01)   *C02F 1/44* (2023.01)

(52) Gemeinsame Patentklassifikation (CPC):
**C02F 1/003; B01D 37/025; C02F 1/688;**
C02F 1/006; C02F 1/283; C02F 1/42; C02F 1/441;
C02F 2201/004; C02F 2201/006; C02F 2301/066;
C02F 2307/06

(86) Internationale Anmeldenummer:
**PCT/EP2020/056865**

(87) Internationale Veröffentlichungsnummer:
**WO 2020/187745 (24.09.2020 Gazette 2020/39)**

(54) **MINERALISIERUNGSKARTUSCHE UND VERFAHREN ZU DEREN BETRIEB**

MINERALIZATION CARTRIDGE AND METHOD FOR THE OPERATION THEREOF

CARTOUCHE DE MINÉRALISATION ET SON PROCÉDÉ DE FONCTIONNEMENT

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **15.03.2019 DE 102019106690**
**11.07.2019 DE 102019118850**

(43) Veröffentlichungstag der Anmeldung:
**19.01.2022 Patentblatt 2022/03**

(73) Patentinhaber: **ACLARIS Water Innovations
GmbH
Lindau, Zweigniederlassung Rebstein
9445 Rebstein (CH)**

(72) Erfinder: **HEITELE, Bernd
9437 Marbach (CH)**

(74) Vertreter: **Otten, Roth, Dobler & Partner mbB
Patentanwälte
Großtobeler Straße 39
88276 Berg / Ravensburg (DE)**

(56) Entgegenhaltungen:
WO-A1-2013/053627   WO-A1-2019/038622
WO-A2-2012/163392   JP-A- H11 319 855
US-B1- 6 553 894

## Beschreibung

Die Erfindung betrifft ein Verfahren zum Betrieb einer leitungsgebundenen Wasserfilterkartusche zur Mineralisierung von Leitungswasser sowie eine leitungsgebundene Wasserfilterkartusche hierfür, nach den Ansprüchen 1 und 15.

Stand der Technik

Am Markt befindliche, leitungsgebundene Filterkartuschen zur Mineralisierung gibt es im Wesentlichen in zwei Ausführungen. In der einen Ausführungsform werden für die Mineralisierung Granulate aus CaCos oder $MgCo_3$ verwendet, teilweise auch mit geringen Anteilen an MgO und CaO. Solche Filter werden beispielsweise bei schwach mineralisierten Wässern mit hohem Korrosionspotential, insbesondere aufbereitetem Wasser aus Umkehrosmoseanlagen, nachgeschaltet. Dadurch wird aufgrund der freien Kohlensäure eine geringe Menge an CaCOs aufgelöst.

In der Folge wird der pH-Wert angehoben und die Korrosivität des Wassers reduziert. Allerdings kann man mit solchen Anordnungen lediglich einige mg Ca oder Mg in Lösung bringen. Auch ist die Kinetik der Auflösung sehr gering, so dass nach wenigen Litern schnellem Durchlauf kaum noch eine nennenswerte Mineralisierung auftritt. Solche Filter benötigen daher immer wieder längere Stillstandszeiten oder können nur sehr geringe Volumenströme aufbereiten.

Weitere am Markt befindliche Mineralisierungsfilter arbeiten mit Ionenaustauschern. Diese werden eingesetzt, um bestimmte gewünschte Mineralien gezielt an das aufzubereitende Wasser abzugeben. Obwohl diese Filter ebenfalls als Mineralisierungsfilter verkauft werden, handelt es ich bei diesen Filtern streng genommen um keine Mineralisierungsfilter, da beispielsweise im Leitungswasser befindliches Calcium gegen Magnesium durch Ionenaustausch ersetzt wird. Der Gesamtmineralgehalt in eq/l des Ausgangswasser bleibt dabei konstant.

Schwach mineralisierte Wässer sind als Durstlöscher bei sportlicher Betätigung jedoch nur bedingt geeignet, da damit Salze, welche durch das Schwitzen verloren gehen, nicht ersetzt werden.

Geschmacklich sind schwach mineralisierte Wässer leicht von gut mineralisierten Wässern zu unterscheiden, da schwach mineralisierte Wässer in der Kehle im Abgang eine bitter empfundene Note hinterlassen. Eine angenehm empfundene Mineralisierung wird etwa ab einer Leitfähigkeit des Trinkwassers von 200 µS/cm erreicht. Ab einer Mineralisierung mit Leitfähigkeiten grösser 1500 µS/cm kann man allerdings den hohen Mineralgehalt schmecken und das Wasser wird als salzig empfunden. Wobei der Geschmack dann auch von der spezifischen Zusammensetzung abhängt.

Um notwendige Mineralien insbesondere bei sportlicher Betätigung zu sich zu nehmen, werden bisher häufig Mineraltabletten dem Trinkwasser zugesetzt. Diese Tabletten bestehen überwiegend aus den Citraten des Magnesiums, Calciums oder Kaliums.

Im Stand der Technik offenbart die WO 2012/163392 A2 eine Filterkartusche bei der ein geringer Teil der durchströmenden Flüssigkeit als Dosierstrom durch einen, ein Mineralisierungsbett aufweisenden Einsatz mit kleinen Eingangs- und Ausgangsöffnungen geführt wird, wobei im Einströmbereich der Kartusche mittels kleiner Flügel der Hauptstrom der Flüssigkeit radial nach außen gelenkt und verwirbelt wird, um eine Ionisation zu bewirken. Am Ausgang der Filterkartusche sind in Strömungsrichtung hintereinander ein Sieb und ein Schwamm als mechanische Filter angeordnet.

Die WO 2019/038622 A1 offenbart eine Wasserfilterkartusche mit zwei in Reihe geschalteten Wasseraufbereitungsstrecken, wobei eine zur Enthärtung mittels Ionentauscher und die nachfolgende zur Anreicherung mit aus einem festen Block abzugebenden Magnesium oder Calcium vorgesehen sind.

Die JP H11 319855 A offenbart eine Wasserfilterkartusche zur zeitgesteuerten Anreicherung von Wasser mittels über einen Zufuhrkanal beizumengendem Granulat, wobei die Kartusche nach Ablauf der vorgesehenen Zeit mittels einer Zirkulationspumpe vollständig entleert wird.

Aufgabe und Lösung

Aufgabe dieser Erfindung ist es nun, eine alternative Möglichkeit zur Mineralisierung von Wasser, insbesondere von Trinkwasser, vorzuschlagen, mittels der auch über lange Zeit große Volumenströme an Wasser mit einem gleichmäßig stabilen Mineralisierungsgrad so mineralisiert werden können, dass das so aufbereitete Wasser einen guten Ersatz von bei sportlicher Betätigung ausgeschwitzten Mineralien ermöglicht, bei gleichzeitig als angenehm empfundenem Mineralisierungsgrad.

Die Lösung der Aufgabe erfolgt durch die Merkmale der Ansprüche 1 und 10, die die wesentlichen Merkmale der Erfindung umfassen. In den abhängigen Ansprüchen sind vorteilhafte und zweckmäßige Weiterbildungen angegeben.

Dementsprechend betrifft die Erfindung in einem ersten Aspekt ein Verfahren zum Betrieb einer leitungsgebundenen Wasserfilterkartusche mit einem Gehäuse in der Form eines Druckbehälters, mit einem Einlass und mit einem Auslass für Wasser. Dieses zeichnet sich dadurch aus, dass innerhalb des Druckbehälters ein Hauptstrom von Wasser, dem Mineralien zudosiert werden, durch eine Hauptleitung geführt wird

und ein Dosierstrom von konzentrierter Salzlösung durch eine Dosierleitung geführt wird,
wobei die Dosierleitung von der Hauptleitung abzweigt und durch einen Vorratsbehälter mit konstantem Volumen führt, in dem sich eine konzentrierte Salzlösung aus Sulfatsalz, Chloridsalz und/oder Hydrogencarbonatsalz befindet, wobei der vom Vorratsbehälter abgehende Teil der Dosierleitung durch eine Dosieröffnung mit konstantem Strömungsquerschnitt an einer Dosierstelle in den Hauptstrom mündet,

und wobei durch eine Widerstandsstrecke im Hauptstrom, welche in Strömungsrichtung vor der Dosierstelle angeordnet ist, der Strömungswiderstand im Hauptstrom so eingestellt wird, dass sich ein Differenzdruck zwischen dem Hauptstrom und dem Dosierstrom ergibt, der

einen zum Hauptstrom im Wesentlichen proportionalen Volumenstrom des Dosierstroms der Salzlösung durch die in den Hauptstrom mündende Dosieröffnung bewirkt.

Erfindungsgemäß liegt in dem Vorratsbehälter ein Salzbett aus Sulfatsalz, Chloridsalz und/oder Hydrogencarbonatsalz, so dass ein Vorratsvolumen an konzentrierter Salzlösung in Strömungsrichtung hinter dem Salzbett gebildet wird.

Mittels einem solchen Verfahren kann eine Mineralisierung von praktisch mineralstofffreiem Wasser (z.B. aus Umkehrosmoseanlagen) oder normal mineralisiertes Wasser, wie z.B. Leitungswasser, durch die Zugabe von gewünschten Mineralien, z.B. Magnesium, ermöglicht werden. Mit Hilfe der Mineralisierung kann ein Trinkwasser erzeugt werden, das eine Leitfähigkeit von wenigstens 200 $\mu$S/cm hat.

Zur Durchführung des erfindundgsgemäßen Verfahrens wird z. B. eine einfach zu installierende und praktische wartungsfreie, leitungsgebundene Filterkartusche zur Mineralisierung verwendet.

Die leitungsgebundene Wasserfilterkartusche umfasst z.B. ein Gehäuse in der Form eines Druckbehälters, einen Einlass und einen Auslass für Wasser. Innerhalb des Druckbehälters ist mindestens ein Vorratsbehälter bzw. ein Solespeicher für die Bevorratung im Betrieb der Wasserfilterkartusche von mindestens einer konzentrierten Salzlösung (auch als Solelösung bezeichnet) aus Sulfatsalzen, Chloridsalzen oder Hydrogencarbonatsalzen vorgesehen, zur Leitwerterhöhung respektive Mineralisierung des die Wasserfilterkartusche durchströmenden Wassers. Wobei weiters eine in Strömungsrichtung eines Hauptstromes des Wasser einer Dosierstelle für die Salzlösung, die auch als Soledosierstelle bezeichnet werden kann, vorangestellte Schüttung aus einem Granulat vorgesehen ist, welche eine Widerstandsstrecke im Hauptstrom ausbildet, in der Weise, dass sich über diese ein Differenzdruck beim Durchströmen der Kartusche aufbaut, welcher einen zum Hauptstrom im wesentlichen proportionalen Dosierstrom der Sole bewirkt, wobei der Dosierstrom eine separate Widerstandsstrecke in der Form einer Widerstandsschicht im Dosierstrom, deren Zulauf in die vorangestellte Schüttung ragt, aufweist. Das Granulat respektive die Widerstandschicht bildet die Widerstandsstrecke im Hauptstrom aus, bzw. die Widerstandstrecke im Dosierstrom.

Alternativ oder zusätzlich hierzu kann die Dosierstrecke bzw. der Dosierstrom auch eine Kapillare umfassen. Diese kann z. B. einen Innendurchmesser in einem Bereich von ca. 0,1 bis 0,5 mm aufweisen. Vorzugsweise einen Innendurchmesser zwischen 0,15 mm und 0,4 mm.

Mit allen diesen Ausführungsformen von Dosierstrecken kann in Abhängigkeit der Viskosität der zuzudosiernden, konzentrierten Salzlösung die gewünschte Zudosiermenge zuverlässig eingestellt werden, insbesondere im Wesentlichen unabhängig von dem an der Wasserfilterkartusche anliegenden Leitungsdruck. D.h., die Dosierung/das Dosierverhältnis bleibt auch bei Druckschwankungen recht stabil.

Weitere Details zu einer solchen Filterkartusche werden später nachfolgend noch näher beschrieben.

Der vom Einlass kommende Hauptstrom kann, in betriebsgemäßer Ausrichtung der Wasserfilterkartusche, mit nach oben gerichteten Auslass, gem. einer ersten Ausführungsform von oben an die Widerstandsstrecke geführt werden, so dass die Widerstandsstrecke von oben nach unten durchströmt wird. Dabei wird der Wasserstrom im Zulauf aufgeteilt und das Druckprinzip als Triebkraft für die Dosierung ausgenutzt.

Gemäß einer anderen Ausführungsform kann der vom Einlass kommende Hauptstrom, wieder in betriebsgemäßer Ausrichtung der Wasserfilterkartusche, mit nach oben gerichteten Auslass, an die Unterseite der Widerstandsstrecke geführt sein, so dass die Widerstandsstrecke von unten nach oben durchströmt wird. Diese Ausführung arbeitet auf der Basis eines Saugprinzips.

Dieses System entlüftet, im Vergleich zur ersten Ausführungsform, wesentlich besser und schneller. Insbesondere kann bei der Inbetriebnahme dabei die im Salzbehälter zwischen den Salzkörnern befindliche Luft durch das Dosierrohr sehr schnell entweichen, da der Widerstand des Dosierrohrs für Luft klein ist gegenüber dem Widerstand mit Wasser.

Die Solelösung wird direkt aus dem Widerstandsrohr der Dosierstrecke in den Hauptstrom des aufzubereitenden Wassers dosiert.

Auftretende Druckschwankungen im Zulauf führen dabei zu Bewegungen in dem grosszügig dimensionierten Zulaufrohr für das Wasser, welches noch beim Durchströmen des Behälters zur Sole wird.

Die Soledosierung selbst bleibt durch das Saugprinzip auch bei äusseren Druckschwankungen nahezu konstant. Bei Druckschwankungen im Zulauf, wie sie bei der Entspannung des gesamten Filters auftreten, z.B. wenn der Wasserdruck vor dem Filter von 2 bar auf 1 bar beim Öffnen eines Hahns zurückgeht, dehnen sich die eingeschlossene Luftblasen im Salzbehälter aus. Diese Luftblasen verdrängen nur wenig gesättige Sole über das nur schwer zu durchströmende mit Granulat gefüllte Dosierrohr in Richtung Auslass, wo hingegen die meiste Sole zurück in das grosse Fallrohr strömt und dabei keine Erhöhung der Salzfracht im mineralisierten Wasser hervorruft.

Bei dem Verfahren kann vorzugsweise vorgesehen sein, dass mindestens eine konzentrierte Salzlösung von Sulfatsalzen, Chloridsalzen oder Hydrogencarbonatsalzen verwendet wird, deren Löslichkeit mindestens 2 g/l bei 20°C beträgt, vorzugsweise wenigstens 50 g/l bei 20°C.

D. h., das Prinzip der Mineraldosierung beruht auf einer Dosierung von mindestens einer konzentrierten Salzlösung, welche im Innern einer Filterkartusche in mindestens einem separaten Behälter aufbewahrt wird bzw. werden.

Die Salzlösung(en) haben dabei eine Löslichkeit von wenigstens 2 g/L (z.B. Ca SO$_4$) in der Regel jedoch grösser als 50g/l und kleiner als 800 g/l. Ein bevorzugter Wert für CaCl$_2$ oder MgCl$_2$ liegt bei ca. 740 g/l. Mit CaClz wasserfrei gerechnet. In diesem Konzentrationsbereich funktioniert die vorgesehene Soledosierung zuverlässig.

Bevorzugt kann die mindestens eine Solelösung mit einem Volumenanteil von 0,05 % bis 2 % zum Hauptstrom dosiert werden. Zur Mineralisierung von RO Wasser (Umkehrosmosewasser) mit einer Leitfähigkeit von kleiner 50 µS/cm benötigt man beispielsweise für 2 mmol Härte (etwa 11,2° dH) im Filtrat ca. 0,8 ml Solelösung bestehend aus Magnesiumsulfat je Liter RO Wasser. Bei dem Salz Natriumhydrogencarbonat benötigt man für 4 mmol etwa 3,5 ml, was aufgrund der Wertigkeit ebenfalls ca. 11,2 °dH entspricht. Die Leitfähigkeit eines solchen Wassers liegt dann bei etwa 600 uS/cm.

Die Dosierung erfolgt durch den Abgriff eines Differenzdrucks, der sich bei Durchströmung einer Widerstandsschicht einstellt. Als Widerstandsschicht werden beliebige Granulate, z.B. i.d.F. einer Schüttung benutzt. Für die Schüttung kann z.B. ein Granulat mit einer Körnung von 0,1 mm bis 2 mm verwendet werden, die insbesondere eine Mindesterstreckung von 1 cm in Strömungsrichtung aufweist.

Hierzu kommen beispielsweise Ionenaustauscher, Aktivkohle oder andere Partikel (Glaskugeln mit einer effektiven hydraulischen Korngrösse von ca. 0,1 bis 2 mm in Betracht.

Beispiel: Wird eine Widerstandsschicht mit einer Korngrösse von 0,15 mm bei einer Schichthöhe von 70 mm und einem Durchströmungsdurchmesser von 80 mm mit einem Volumenstrom von 1,0 l/min durchströmt, so ergibt sich ein Differenzdruck über die Höhe der Widerstandsschicht von ca. 100 mbar, (siehe auch Kozeny-Carman Gleichung). Allerdings kann die absolute Grösse des Widerstands bei unterschiedlichen Granulaten nur ungenau vorhergesagt werden, da der Widerstand sowohl von der Form der Partikel als auch dem Packungsgrad stark abhängt.

Daher wird in der vorgeschlagenen Lösung vorzugsweise dasselbe Granulat für die Widerstandsschicht des Hauptstroms und die Widerstandsschicht des Dosierstroms verwendet.

Der Leitwert des Wassers zwischen Einlass und Auslass wird vorzugsweise um mindestens 100 pS/cm bis 2000 µS/cm angehoben, vorzugsweise um 600 pS/cm.

Um dies zu erreichen ragt ein Dosierrohr in die Widerstandsschicht, welches bevorzugt mit demselben Granulat wie in der Widerstandsschicht des Hauptstrom gefüllt ist. Das Dosierverhältnis von Dosierstrom zu Hauptstrom lässt sich damit über die Flächenverhältnisse und die effektive Höhe von der Widerstandsschicht des Hauptstroms und der effektiven Höhe der Widerstandsschicht des Dosierstroms anpassen.

Folgende Formel ist zu verwenden: (Querschnittsfläche des Dosierrohrs/effektive Höhe der Widerstandsschicht des Dosierrohrs)/ (Querschnittsfläche des Hauptstroms /effektive Höhe der Widerstandsschicht des Hauptstroms) ergibt das gewünschte Dosierverhältnis von Solekonzentrat zu Hauptstrom (unbehandeltem, nicht mineralisiertem Wasser)

$$\frac{A_{DR}}{H_{DR}} \Big/ \frac{A_{HS}}{H_{HS}} = V_D$$

Beispiel: Es soll ein Dosierverhältnis von 0,001 erreicht werden. dh. 1 ml Konzentrat auf 1000 ml Wasser. Bei 80 mm Innendurchmesser des Filters (= Durchmesser der Widerstandsschicht des Hauptstroms) und 70 mm effektiver Höhe der Widerstandsschicht des Hauptstroms und 90 mm effektiver Höhe der Widerstandsschicht des Dosierstroms kann der Durchmesser des Dosierrohrs mit folgenden Zusammenhängen abgeschätzt werden.

$$A_{DR} = V_D \frac{A_{HS}}{H_{HS}} H_{DR}$$

Mit $A_{HS}$ = 5026 mm$^2$, $V_D$ = 0.001, $H_{HS}$ = 70mm, $H_{DR}$ = 90mm

Ergibt sich $A_{DR}$ = 6.5mm$^2$

Und damit ein Innendurchmesser des Dosierrohrs von etwa 3 mm.

Wird das Dosierrohr von konzentrierter Salzlösung durchflossen, so muss der Widerstand des Dosierrohrs auch an die dynamische Viskosität der konzentrierten Salzlösung im Vergleich zu der dynamischen Viskosität von Wasser angepasst werden.

Eine Berücksichtigung ist für hoch konzentrierte Salzlösungen mit einem Salzgehalt grösser 250 g/l notwendig. So weist beispielsweise eine konzentrierte CaCL$_2$ Lösung mit bis zu 740 g/l Salz eine signifikant höhere dynamische Viskosität als reines Wasser auf. Die dynamische Viskosität des Salzkonzentrats kann gegenüber dem Wasser um etwa Faktor 4 höher sein. Entsprechend muss, um die erhöhte dynamische Viskosität auszugleichen, der Dosierquerschnitt um etwa Faktor 4 vergrössert werden, um das gewünschte Dosierverhältnis zu erreichen.

Dieser Effekt ist für eine gleichmässige Dosierung über den Lebenszeitraum der Kartusche vorteilhaft, da die Salzlösung in der Salzkammer gegen Ende der Kartuschenlebensdauer immer stärker mit dem zufliessenden Rohwasser verdünnt wird. Durch die Verdünnung des Salzkonzentrats sinkt auch dessen Viskosität und die Dosiermenge erhöht sich. Insgesamt bleibt die zudosierte Salzmenge aufgrund der gegenseitigen Wechselwirkung -Verdünnungswirkung/sinkende Viskosität/höhere Zudosierratezumindest im Groben betrachtet, jedoch in etwa gleich, bis zu ihrer abschliessenden Erschöpfungsphase.

$$\frac{\frac{A_{DR}}{H_{DR}}\,\eta s}{\frac{A_{HS}}{H_{HS}}\,\eta w} = V_D$$

Zur Bestimmung der Dosiermenge - obige Gleichung um die dynamische Viskosität von Wasser : $\eta w$ und $\eta s$ - dynamische Viskosität der Salzlösung.

Die Widerstandsstrecke kann auch durch eine Kapillare anstelle eines mit Granulat gefüllten Dosierrohrs gebildet werden. Wird für die Widerstandsstrecke des Haupstroms Granulat mit einer Körnung von 0,1 bis etwa 1 mm verwendet, so hat sich gezeigt, dass der Innendurchmesser der Kapillare zur Bildung der Widerstandsstrecke zur Dosierung der Salzlösung im Bereich von 0,1 mm bis 0,5 mm liegen soll, insbesondere zwischen 0,15 bis 0,4 mm.

Wichtig ist zu erwähnen, dass insbesondere im Dosierstrom noch weitere Widerstände auftreten können. Dies sind zum Beispiel Luftblasen, welche durch Gitterstrukturen oder Vliese gepresst werden müssen. So ist die Dosiermenge reduziert, bis die Leitungen für den Dosierstrom Luftblasen frei sind. Daher muss die Widerstandsschicht des Hauptstroms bei dem vorgesehenen Mindestdurchsatz des Filters wenigstens so viel Differenzdruck erzeugen, wie die Höhe der Dosierkammer inklusive Dosierrohr an Hydrostatischen Druck bei dem Medium Wasser erzeugt. Auch hat die Praxis gezeigt, dass gegenüber der Theorie auch aufgrund der zusätzlichen Widerstände ein um etwa 1 mm grösserer Durchmesser des Dosierrohrs erforderlich ist, um das Zieldosierverhältnis zu erreichen.

Mit der oben beschriebenen Apparatur kann im Durchlauf ein weitgehend durchflussunabhängiges Dosierverhältnis zwischen unbehandeltem Wasser und Sole erreicht werden. In obigem Beispiel ist dies zwischen 0,5 l/min bis etwa 3 l/min gegeben.

Im praktischen Einsatz dieses Verfahrens zeigt sich jedoch, dass insbesondere nach längeren Betriebsstillstandszeiten (Stagnation) eine deutliche Überdosierung der Sole während der Entnahme der ersten 0,5 bis 1 L mineralisiertem Wasser auftreten kann.

Dies liegt insbesondere daran, dass in dem Solebehälter immer geringfügige Lufteinschlüsse vorhanden sind und weiterhin über beispielsweise die Wasserleitung Druckschwankungen im Gehäuse der Mineralisierungskartusche auftreten können, welche kleinste Ströme von nicht mineralisiertem Wasser in den Solebehälter über den Dosieraustritt in den Behälter und bei Entspannung auch von Sole in den Filter erzeugen. Treten diese Schwankungen häufig auf, so kommt diese einem Pumpvorgang von Sole in den Druckbehälter gleich.

Als Folge hat beispielsweise der erste Halbe Liter nach Stillstand über Nacht nicht die gewünschten 600 pS/cm sondern beispielsweise 2000 pS/cm. Gemäß einer weiter bevorzugten Ausführungsform wird daher ein Vorratsbehälter als Solezwischenspeicher zwischen Solebehälteraustrittsstelle aus der Dosierkammer und der Soledosierstelle zwischengeschaltet.

Damit kann die Solelösung zwischen ihrer Austrittsstelle aus dem mindesten einen Vorratsbehälter bzw. Dosierkammer und der Soledosierstelle in den Hauptstrom des Wassers in einem Solezwischenspeicher zwischengespeichert werden, welcher Solezwischenspeicher vorzugsweise aus einem flexiblem Material hergestellt und insbesondere in der Betriebsstellung der Wasserfilterkartusche im Wesentlichen horizontal angeordnet ist. Die horizontale Ausrichtung bezieht sich auf die Betriebsstellung der Aufbereitungsvorrichtung, wie z.B. einer an einen leitungsgebundenen Filterkopf anschließbare Filterkartusche.

Dieser Behälter bzw. Solezwischenspeicher kann beispielsweise ein flexibler Schlauch mit einer Länge von etwa 150 mm und einem Innendurchmesser von etwa 1 mm sein. Damit wird bei Druckschwankungen der Umgebung die Sole im Schlauch lediglich vor und zurück geschoben, es tritt jedoch keine jeweils frische Sole aus dem Solebehälter aus.

Bevorzugt kann als Solespeicher ein Schlauch mit einem Füllvolumen von 0,05 ml bis 0,3 ml verwendet werden.

Insbesondere bevorzugt kann als Solezwischenspeicher ein Schlauch mit einer Länge von 5 cm bis 30 cm und insbesondere einem Durchmesser von 0,5 mm bis 3 mm verwendet werden.

Da die Wasserfilterkartusche bei einem Druck von 0,2 bar bis 8,0 bar betrieben werden kann, kann sie problemlos an alle gängigen Wasserversorgungsleitungen angeschlossen werden.

Formel zur Ermittlung des zylindrischen Vergleichsdurchmessers bei Verwendung eines konischen Rohrs mit d1 (Zulauf) und d2 (Ablauf):

d1    - grosser Durchmesser

d2    - kleiner Durchmesser

dR - Vergleichsdurchmesser eines zylindrischen Rohrs

$$dR = \sqrt{\cfrac{1}{\left(\cfrac{1}{d1d2 - d2^2} - \cfrac{1}{d1^2 - d1d2}\right)}}$$

Gemäß einem zweiten Aspekt wird eine Leitungsgebundene Wasserfilterkartusche vorgeschlagen, umfassend ein Gehäuse in der Form eines Druckbehälters, einen Einlass und einen Auslass für Wasser. Diese zeichnet sich dadurch aus, dass innerhalb des Druckbehälters eine Hauptleitung zur Führung eines Hauptstroms von Wasser, dem Mineralien zudosiert werden soll,

und eine Dosierleitung zur Führung eines Dosierstroms von konzentrierter Salzlösung vorgesehen sind,

wobei die Dosierleitung von der Hauptleitung abzweigt und einen Vorratsbehälter mit konstantem Volumen umfasst, in dem eine Salzlösung aus Sulfatsalz, Chloridsalz und/oder Hydrogencarbonatsalz vorhanden ist, wobei der vom Vorratsbehälter abgehende Teil der Dosierleitung

durch eine Dosieröffnung mit konstantem Strömungsquerschnitt an einer Dosierstelle mit dem Hauptstrom verbunden ist,

und wobei eine Widerstandsstrecke in der Hauptleitung in Strömungsrichtung vor der Dosierstelle und bevorzugt ganz oder teilweise hinter der Abzweigung der Dosierleitung angeordnet ist, deren Strömungswiderstand so eingestellt ist, dass sich ein Differenzdruck zwischen dem Hauptstrom und dem Dosierstrom ergibt, der

einen zum Hauptstrom im Wesentlichen proportionalen Volumenstrom des Dosierstroms der Salzlösung durch die in den Hauptstrom mündende Dosieröffnung bewirkt.

Die leitungsgebundene Wasserfilterkartusche umfasst eine Dosierstrecke, bzw. einen Dosierstrom mit einer Widerstandsstrecke in der Form einer Schüttung aus einem Granulat und/oder einer Kapillare und/oder einer anderweitig porös durchlässigen Widerstandskomponente, beispielsweise einer aus gesintertem Granulat gebildeten Widerstandskomponente umfassen, welche vorzugsweise einen Innendurchmesser in einem Bereich von 0,1 mm bis 0,5 mm aufweisen, insbesondere zwischen 0,17 mm und 0,35 mm.

Weiter ist in dem Vorratsbehälter ein Salzbett aus Sulfatsalz, Chloridsalz und/oder Hydrogencarbonatsalz vorhanden, so dass ein Vorratsvolumen an konzentrierter Salzlösung in Strömungsrichtung hinter dem Salzbett vorliegt.

Mittels einer derartigen Vorrichtung kann eine Mineralisierung von praktisch mineralstofffreiem Wasser (z.B. aus Umkehrosmoseanlagen) oder normal mineralisiertes Wasser, wie z.B. Leitungswasser, durch die Zugabe von gewünschten Mineralien, z.B. Magnesium, in einfach zu handhabender Weise ermöglicht werden.

Die Leitungsgebundene Wasserfilterkartusche umfasst eine Dosierstrecke bzw. der Dosierstrom mit einer Widerstandsstrecke in der Form einer Schüttung aus einem Granulat und/oder einer Kapillare, welche vorzugsweise einen Innendurchmesser in einem Bereich von 0,1 bis 0,5 mm aufweisen, insbesondere zwischen 0,17 und 0,35 mm.

Vorzugsweise ist zwischen der Soleaustrittsstelle des wenigstens einen Vorratsbehälters, die auch als Auslass bezeichnet wird, und der Soledosierstelle ein Solezwischenspeicher vorgesehen, der in der Betriebsstellung der leitungsgebundenen Wasserfilterkartusche vorzugsweise im Wesentlichen horizontal angeordnet ist.

Der technische Effekt ist, dass hierdurch eine Aufkonzentrierung des im Hauptstrom der Filterkartusche befindlichen Wassers während Stagnationszeiten verhindert werden kann. Insbesondere bei wiederholten Druckwechseln im Leitungssystem und/oder bei Ausgasung von Lufteinschlüssen.

Denn der Solezwischenspeicher bewirkt, dass die darin befindliche Sole bei Druckschwankungen zwar hin und her pendeln kann. Die Konzentration der in seinem Ausgangsbereich -der auch als Dosierstelle bezeichnet wird- bevorrateten Sole kann aber nicht nach einem durch Eindringen von Wasser aus dem Hauptstrom erfolgten Verdünnungseffekt wieder angehoben werden. Denn hierzu wäre eine entsprechende Nähe zum Salzdepot erforderlich, um weiteres Salz zu lösen. Gerade das wird aber durch das zwischengeschaltete Soledepot und der darin als Barriere befindlichen Sole verhindert.

Der Solezwischenspeicher kann ein Schlauch sein, welcher vorzugsweise ein Füllvolumen von 0,05 ml bis 0,3 ml aufweist. Die Ausbildung als Schlauch hat den Vorteil, dass der Solezwischenspeicher z.B. als in einer Ebene in der Filterkartusche liegend angeordnete Spirale ausgebildet werden kann.

Dadurch muss auch für die Abgabe von Sole aus dem Solezwischenspeicher im Wesentlichen kein Druck und damit kein zusätzlicher Widerstand überwunden werden. Der hiermit verbundene technische Effekt ist, dass die Steuerung der Soleabgabe, nach der Einlaufphase der Filterkartusche, von diesem Solezwischenspeicher im Wesentlichen unberührt bleibt.

Als besonders vorteilhaft hat es sich herausgestellt, wenn der Schlauch 5 cm bis 30 cm lang ist und einen Durchmesser von 0,5 bis 3 mm aufweist.

Eine besonders einfache Steuerung der Dosierung kann realisiert werden, wenn die Widerstandsschicht des Dosierstroms und die Widerstandsschicht des Hauptstroms, der auch als Filtratstrom bezeichnet werden kann, aus dem selben Granulat besteht. Denn, dann weisen beide Widerstandsschichten den selben spezifischen Widerstand auf und das Widerstandsverhältnis der Strömungsstrecken kann über Querschnitt und Länge der Strömungsstecken eingestellt werden.

Ausführungsbeispiele:
Nachfolgend werden unter Bezugnahme auf die beigefügten Figuren Ausführungsbeispiele näher beschrieben.

Es zeigen:

Fig. 1: Beispielhaft und schematisch eine Wasserfilterkartusche in Draufsicht mit eingezeichneten Längsschnitt A-A und Horizontalschnitt/Querschnitt B-B.

Fig. 2: Beispielhaft und schematisch eine Schnittdarstellung durch eine Wasserfilterkartusche, in Längsschnitt A-A nach Fig. 1, in einer ersten Ausführungsform.

Fig. 3: Beispielhaft und schematisch eine Schnittdarstellung der ersten Ausführungsform der Wasserfilterkartusche nach Fig. 1, in Horizontalschnitt/Querschnitt B-B.

Fig. 4 und 5: Beispielhaft und schematisch zwei Schnittdarstellungen einer zweiten Ausführungsform der Wasserfilterkartusche nach Fig. 1, in Längsschnitt A-A bzw. in Horizontalschnitt/Querschnitt B-B.

Fig. 6 bis 8: Beispielhaft und schematisch weitere Details zum Aufbau der Wasserfilterkartuschen.

Fig. 9 und 10: Wiederum beispielhaft und schematisch zwei weitere Ausführungsformen mit gegenüber den im Druckbetrieb arbeitenden Ausführungen in den Fig. 2 bis 8 dahingehend abgewandelten Innenaufbau, dass diese mit Saugprinzip funktionieren.

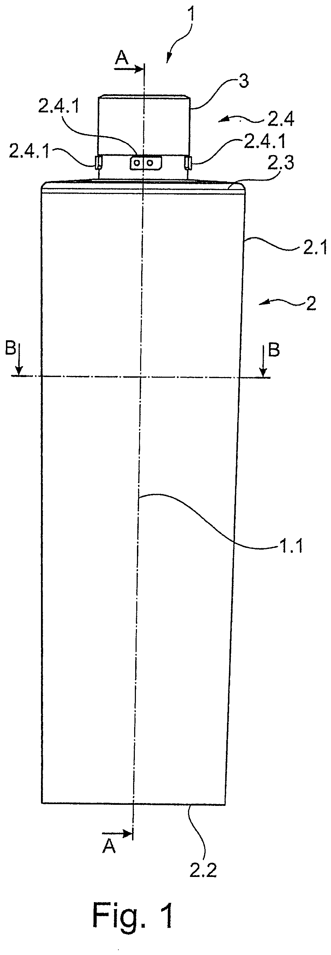

Demgemäß zeigt die **Figur 1** die Darstellung einer leitungsgebundenen Wasserfilterkartusche 1 mit einem Gehäuse 2, umfassend eine Wand 2.1, einen Boden 2.2, einen Deckel 2.3 und einen Hals 2.4.

Am Hals 2.4 sind, beispielhaft um diesen herum verteilt angeordnet, drei Fixierelemente 2.4.1 dargestellt. Mit diesen Fixierelementen kann die Filterkartusche 1 nach deren Einsetzung in einen komplementären, leitungsgebundenen Anschlusskopf (nicht dargestellt) in diesem fixiert und danach in Betrieb genommen werden.

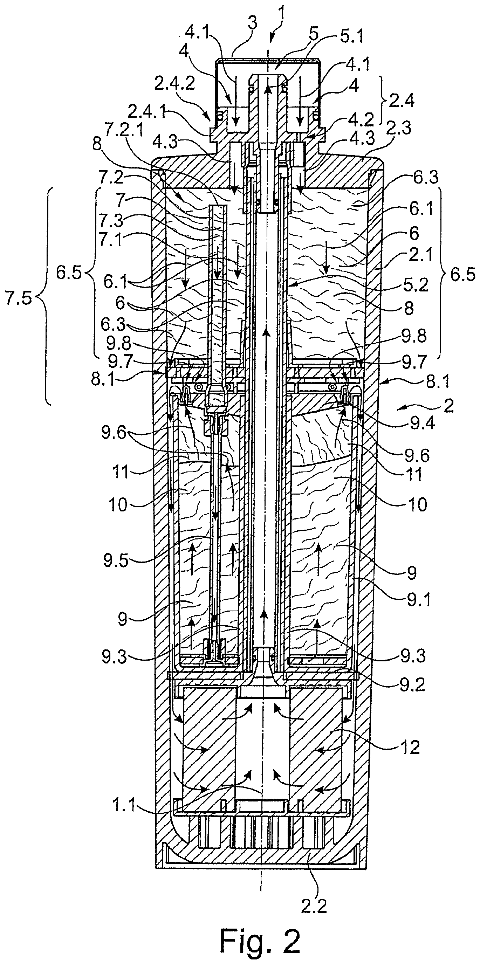

Eine Schutzkappe 3 überdeckt und verschließt in Fig. 1 abnehmbar den Anschlussbereich der Filterkartusche (vgl. Fig. 2).

Entlang der durch das Gehäuse der Filterkartusche verlaufenden Längsachse 1.1 ist eine vertikal verlaufende Schnittlinie A-A dargestellt und quer dazu etwa im oberen Drittel des Gehäuses eine horizontal verlaufende Schnittlinie B-B. Diese sind relevant für die weiteren Figuren.

Die **Figur 2** zeigt eine Schnittdarstellung durch die Filterkartusche 1 gemäß der Schnittlinie A-A aus Fig. 1. Darin sind in aufgeschnittenem Zustand dargestellt: Gehäuse 2, Wand 2.1, Boden 2.2 und auf die dem Boden gegenüberliegende Stirnseite aufgesetzter Deckel 2.3 mit daran anschließendem Hals 2.4.

In diesem Hals 2.4 ist zentral innen ein rohrartig vorstehender Auslass 5 für den Austritt des von der Filterkartusche aufzubereitenden Wassers ausgebildet. Ihn umschließt koaxial ein Einlass 4 in die zylindrisch-konisch ausgebildete Filterkartusche 1 für das aufzubereitende Wasser, welcher von der Außenwandung 2.4.2 des Hales 2.4 begrenzt ist. Pfeile 4.1 und 5.1 symbolisieren die Fließrichtung des aufzubereitenden Wassers.

Eine abnehmbare Schutzkappe 3 schützt diese Ein- und Auslassbereiche 4, 5 der Filterkartusche 1, insbesondere gegen Verunreinigungen und/oder Beschädigungen, z.B. der Anschluss- und/oder Dichtungsstrukturen.

Im Deckel 2.3 ist in dessen rechter Hälfte ein in der Schnittebene A-A liegender Durchlass 4.2 für das Wasser zwischen Einlass 4 und dem Inneren der Kartusche 1 gezeigt. Es handelt sich hierbei um einen von vorzugsweise mehreren um den Auslass 5 herum im Deckel 2.3 ausgebildeten Durchlässen. Diese münden in einer innerhalb des Deckels 2.3 zum Hals hin ausgebildeten, vorzugsweise rundumlaufenden Ausnehmung 4.3, so dass sich das einfließende und aufzubereitende Wasser im Inneren der Wasserfilterkartusche in deren oberen Bereich darin verteilen und gleichmäßig zu den betreffenden, stromabwärts in der Filterkartusche nachfolgenden Strömungsstrecken oder Strömungspfaden strömen kann.

Bei diesen Strömungsstrecken oder Strömungspfaden handelt es sich in diesem Ausführungsbeispiel um einen Hauptstrompfad 6 und einen Dosierstrompfad 7. Auch hier symbolisieren Pfeile 6.1 und 7.1 die Fließrichtung des Wassers bzw. des betreffenden Strömungspfades.

Der Hauptstrompfad 6 erstreckt sich im, als Granulatkammer 8 bezeichneten, oberen Viertel der hier dargestellten Ausführungsform einer Filterkartusche 1, im Querschnitt über die gesamte Fläche des Innenraums der Filterkartusche, abzüglich der darin angeordneten Leitungen, Dosierrohr 7.2 für den Dosierstrompfad 7 und Auslassrohr 5.2 für den Auslassströmungspfad 5.

Die Granulatkammer 8 ist stromabwärts durch einen Granulatkammerboden 8.1 begrenzt. Dieser Granulatkammerboden kann umfassen, ein Flies, ein Gitter und/oder dgl. mehr. Er hält in der Granulatkammer 8 angeordnetes Granulat zurück.

Das Granulat wirkt in den beiden Strömungspfaden 6 und 7 jeweils als Widerstandsschicht für durchströmendes Wasser und ist als Ansammlung von Granulat 6.3 im Hauptsrompfad 6 bzw. 7.3 im Dosierstrompfad 7 dargestellt. Das Granulat respektive die Widerstandschicht bildet die Widerstandsstrecke 6.5 im Hauptstrom 6 aus, bzw. die Widerstandstrecke 7.5 im Dosierstrom 7. Vorzugsweise handelt es sich dabei jeweils um das gleiche Granulat, welches dementsprechend auch den gleichen spezifischen Strömungswiderstand aufweist und damit den gleichen Differenzdruck pro cm in Fließrichtung bewirkt. Dies erleichtert die Einstellung eines auf diesem Differenzdruck basierenden Dosierverhältnisses zwischen dem Hauptstrom 6 und dem Dosierstrom 7 (s. Erläuterung im allgemeinen Beschreibungsteil).

Die Granulatschicht, d.h. die Widerstandsstrecke 6.5 des Hauptstrompfades 6, bzw. die Widerstandstrecke 7.5 des Dosierstrompfades 7, wird dabei von oben nach unten durchströmt.

Stromabwärts und in der Darstellung der Fig. 2 unterhalb der Granulatkammer 8 ist eine Dosierkammer 9 in der Form eines Salz- und Solebehälters 9 angeordnet. Dieser umfasst eine äußere Dosierkammerwand 9.1, einen Dosierkammerboden 9.2, eine innere Dosierkammerwand 9.3 und einen Deckel 9.4.

Die Dosierkammer 9 ist als Hohlzylinder mit einer axialen Ausnehmung für das Auslassrohr 5.2 ausgebildet. Sie erstreckt sich somit rundum und in der Darstellung der Fig.2 links und rechts der Kartuschenlängsachse 1.1, wobei linke und rechte Seite miteinander verbunden sind.

Das Dosierrohr 7.2 durchdringt den Granulatkammerboden 8.1 und verbindet die Granulatkammer 8 mit der Dosierkammer 9 durch den Dosierkammerdeckel 9.4 hindurch.

Im Anschluss an das Dosierrohr 7.2 führt in Strömungsrichtung 7.1 eine Dosierleitung 9.5 vom Dosierkammerdeckel 9.4 zum Dosierkammerboden 9.2, um das im Betrieb der Filterkartusche 1 über die Dosierstrecke 7 strömende Wasser in Bodennähe aus der Dosierkammer 9 ausströmen zu lassen.

In der als Solebehälter 9 fungierenden Dosierkammer 9, die auch als Vorratsbehälter 9 bezeichnet wird, befindet sich Salz 10. Dieses wird durch im Betrieb der Filterkartusche durchströmendes Wasser zu Sole 11 gelöst. Die Sole steht dann als konzentrierte Salzlösung 11 oberhalb des Salzes 10 in der Dosierkammer 9 bis an die Unterseite des Dosierkammerdeckels 9.4.

Zum Zwecke der verbesserten Strömungsführung in der Dosierkammer 9 (vgl. Pfeile 9.6) und insbesondere zu deren Entlüftung ist der Dosierkammerdeckel 9.4 in Betriebsstellung der Filterkartusche, wie in Fig. 2 dargestellt, im Querschnitt betrachtet an seiner Unterseite schräg gestaltet. Die schräge Decke der Dosierkammer 9 bewirkt ein erleichtertes Wandern von Luftblasen, insbesondere kleinen Luftblasen, hin zum Ausgang 9.7 der Dosierkammer.

Dieser Ausgang 9.7 ist im höher liegenden Bereich der Dosierkammer 9 i.d.F. eines Durchlasses aus der Dosierkammer 9 heraus ausgebildet. Wobei in dieser Ausführungsform beispielhaft zwei Ausgänge gezeigt sind, einer links und einer rechts in der Abbildung.

In einer ersten Ausführungsform kann der Ausgang 9.7 als Dosierstelle 9.8 für die konzentrierte Salzlösung 11 in den Hauptstrom 6 fungieren. Die Sole vermengt sich mit dem Hauptstrom 6 und fließt mit ihm zwischen der Wand 2.1 des Gehäuses 2 und der äußeren Wand 9.1 der Dosierkammer entlang, in der Darstellung der Fig. 2 nach unten, hin zum Auslassrohr 5.2 und weiter zum Auslass 5.

Um sicherzustellen, dass das von der Filterkartusche 1 aufbereitete Wasser diese keimfrei verlässt, kann es über einen entsprechenden Filter 12 geführt werden, z.B. einen Aktivkohlefilter. Ein solcher ist beispielhaft unterhalb der Dosierkammer 9 in der Fig.2 als ein weiterer Hohlzylinderkörper dargestellt. Seine zentral innere Ausnehmung mündet in das Auslassrohr 5.2

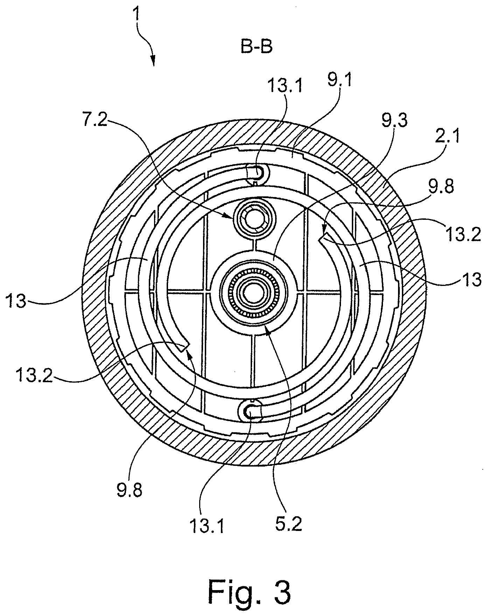

Entsprechend einer zweiten, bevorzugten Ausführungsform kann demgegenüber der Ausgang 9.7 der Dosierkammer 9 mit einem als Puffer wirkenden, weiteren Vorratsbehälter 13 bzw. Solezwischenspeicher 13 verbunden sein. Dieser Solezwischenspeicher 13 kann z.B. i.d.F. eines Schlauches ausgebildet sein, wie in **Fig. 3** dargestellt. Diese zeigt die Darstellung in der Schnittebene B-B der Figur 1, bezogen auf die Ausführungsform gem. Fig. 2, quer durch die Filterkartusche 1, und um 90 Grad im Uhrzeigersinn gedreht.

Die Dosierstellen 9.8 für die Sole 11 in den Hauptstrom 6 sind in diesem Fall jeweils der Ausgang 13.2 des jeweils als Schlauch ausgebildeten Vorratsbehälters 13 bzw. Solezwischenspeicher 13. Dieser Schlauch 13 liegt etwa spiralförmig in oder auf der Schnittebene B-B. Der Anschluss 13.1 des Schlauchs 13 geht durch den Granulatkammerboden 8.1 in die Dosierkammer 9, vorzugweise abgewinkelt.

Dieser Vorratsbehälter 13 bewirkt, dass im Stagnationsfall, wenn also die Filterkartusche nicht durchflossen ist, keine Überkonzentrierung im Mineralisierungsvorgang durch unbeabsichtigte Pumpvorgänge erfolgen kann, beispielsweise aufgrund von Druckschwankungen/Druckschlägen und/oder Austritt von z.B. Luft im System (s. obige Erläuterungen). Ansonsten bezeichnen gleiche Bezugszeichen gleiche Merkmale wie in den anderen Figuren.

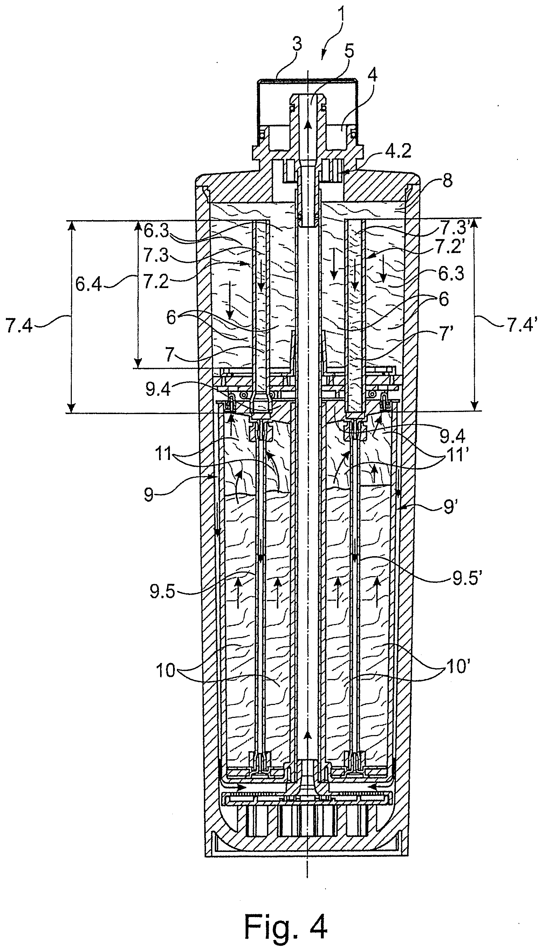

Die **Figur 4** zeigt eine weitere beispielhafte Ausführungsform einer Filterkartusche 1. Die gleichen Bezugszeichen bezeichnen auch darin die gleichen Merkmale wie in den vorangehenden Figuren.

Im Unterschied zur Fig. 2 sind hier zwei Dosierkammern, eine linke 9 und eine rechte 9', mit jeweils einem zugehörigen Dosierrohr 7.2 bzw. 7.2' ausgebildet. Jede Dosierkammer 9, 9' kann mit dem gleichen oder, wie beispielhaft dargestellt, einem anderen Salz 10 bzw. 10' wie die jeweils andere Dosierkammer 9', 9 gefüllt sein. Dementsprechend werden auch zwei gleiche, oder wie hier dargestellt, zwei unterschiedliche Solen 11 und 11' gebildet.

Das Funktionsprinzip für die Zudosierung von Mineralien, also der jeweiligen Sole 11 bzw. 11', in den Hauptstrom 6 kann wie in den Beispielen der Figuren 2 und/oder 3 realisiert sein.

Auch hier sind in der Granulatkammer 8 und in den Dosierrohren 7.2, 7.2' jeweils Granulatschichten angeordnet, vorzugsweise jeweils aus dem gleichen Granulat, um den gleichen Widerstandswert pro Strecke auszubilden.

Die effektive Höhe 6.4 der Widerstands- bzw. Granulatschicht 6.3 im Hauptstrom 6 erstreckt sich von der Höhe des Einlasses des Dosierrohres 7.2 bzw. 7.2' bis zum Granulatkammerboden 8.1.

Die effektive Höhe 7.4 bzw. 7.4' der Widerstands- bzw. Granulatschicht 7.3 bzw. 7.3' im jeweiligen Dosierstrom 7, 7' erstreckt sich ebenfalls von der Höhe des Einlasses des betreffenden Dosierrohres 7.2 bzw. 7.2' bis zu dessen Ende, welches hier im Dosierkammerboden lokalisiert ist 9.4.

Das rechte Dosierrohr 7.2' ist beispielhaft anders dimensioniert, als das linke. Z.B. könnte damit ein unterschiedliches Dosierverhältnis zwischen linkem und rechtem Dosierstrom bewirkt. werden. Z.B. für Sulfatsalz 10 links und für Hydrogencarbonatsalz 10' rechts.

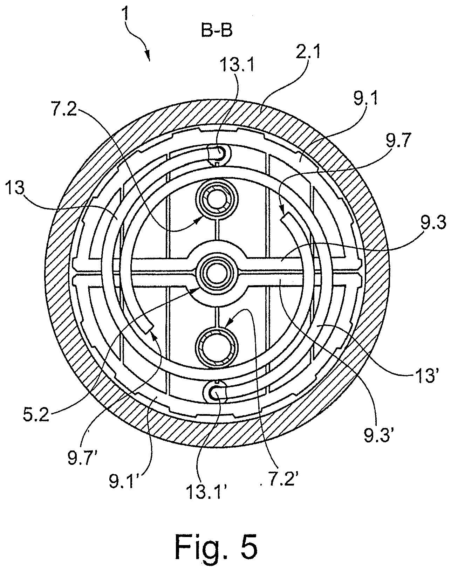

Die **Figur 5** zeigt, ähnlich wie die Fig. 3, die Darstellung einer Filterkartusche 1 in der Schnittebene B-B der Figur 1, jedoch bezogen auf die Ausführungsform gem. Fig. 4, quer durch die Filterkartusche 1, und um 90 Grad im Uhrzeigersinn gedreht.

In der hier unteren Hälfte der Darstellung ist die rechte Hälfte aus der Fig. 4 in Draufsicht gezeigt. Die hier obere Hälfte zeigt die linke Hälft aus der Figur 4. Auch hier bezeichnen die gleichen Bezugszeichen die gleichen Merkmale wie in den vorangehenden Figuren, insbesondere wie in der Figur 4.

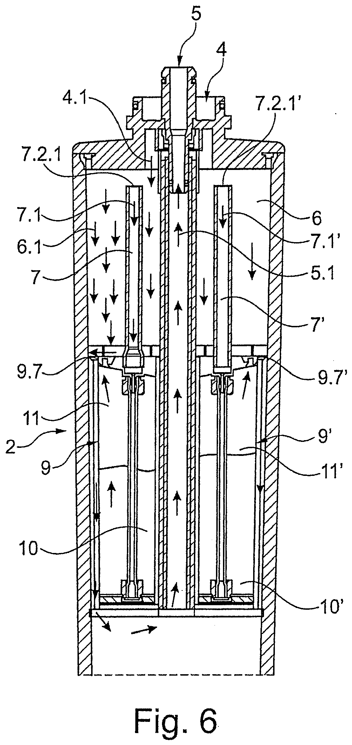

Die **Figuren 6 bis 8** zeigen zum besseren Verständnis ergänzende Darstellungen.

So zeigt die **Figur 6** ebenfalls einen Längsschnitt durch eine Filterkartusche 1 mit Gehäuse 2. Auch hier bezeichnen gleiche Positionszeichen gleiche Merkmale wie in den anderen Figuren. So bezeichnet z.B. 6 den Hauptstrompfad, 7 und 7'die Dosierstrompfade, 6.1, 7.1, 7.1'die Pfeile für die betreffenden Strömungsrichtungen. Die Positionen 9.7 und 9.7' die beiden Ausgänge aus den beiden Dosierkammern 9 bzw. 9' als Dosierstellen zur Zudosierung der Sole zum Hauptsrompfad 6, was auch als Mischstelle bezeichnet werden kann, und 10, 10'das jeweilige Salz sowie 11, 11'die zugehörige Sole oder den Soleüberstand. Der Einlass bzw. Zulauf in die Dosiertrecke ist mit 7.2.1 bzw. 7.2.1' bezeichnet.

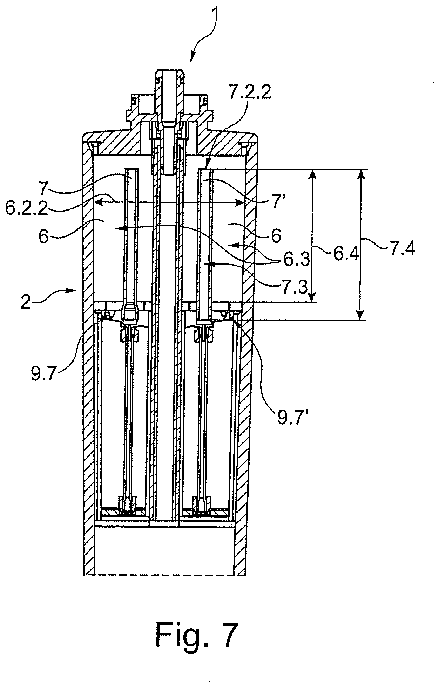

Dementsprechend zeigt die **Figur 7,** ähnlich wie Fig. 4, die Filterkartusche 1 mit Gehäuse 2, Hauptstrom 6, Dosierstrom 7 und 7' mit effektiver Höhe 6.4 der Widerstandsschicht für den Hauptstrom 6 und effektiver Höhe 7.4 für den Dosierstrom 7 bzw. 7' und die jeweilige Querschnittsfläche 6.2.2 für den Hauptstrom und 7.2.2 für den Dosierstrom. Das Granulat im Hauptstrom ist mit 6.3 und das im Dosierstrom mit 7.3 bezeichnet.

Die Soledosierstellen sind demgemäß an den mit 9.7 und 9.7' bezeichneten Ausgängen für eine Ausführung mit direkter Zudosierung von Sole aus der Solekammer 9 realisiert, im Unterschied zu den Ausführungen gem. der Fig. 3 und 5. D.h., ohne Vorratsbehälter 13 bzw. Solezwischenspeicher 13.

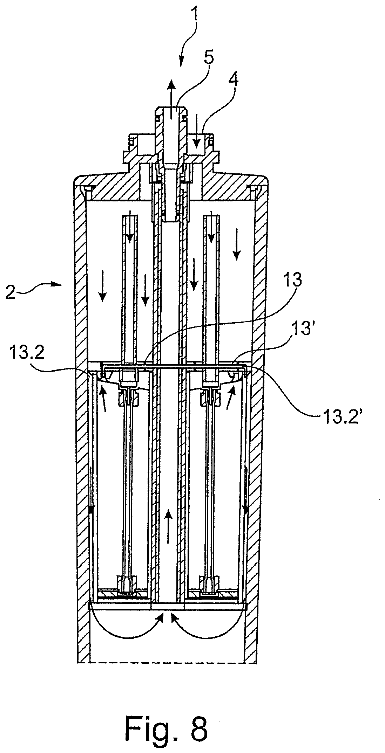

**Figur 8** zeigt ebenfalls eine Filterkartusche 1 mit Gehäuse 2 in Schnittdarstellung. Diese unterscheidet sich von der Darstellung in Figur 7 im Wesentlichen darin, dass hier jeweils ein Vorratsbehälter 13 bzw. Solezwischenspeicher 13 für die konzentrierte Salzlösung in der Form eines Schlauches 13 vorgesehen ist, entsprechend zu den Ausführungsformen gem. der Figuren 3 und 5. Die betreffende Dosierstelle 9.8 ist hier jeweils durch den Ausgang 13.2 bzw. 13.2' des Schlauchs 13 bzw. 13' realisiert.

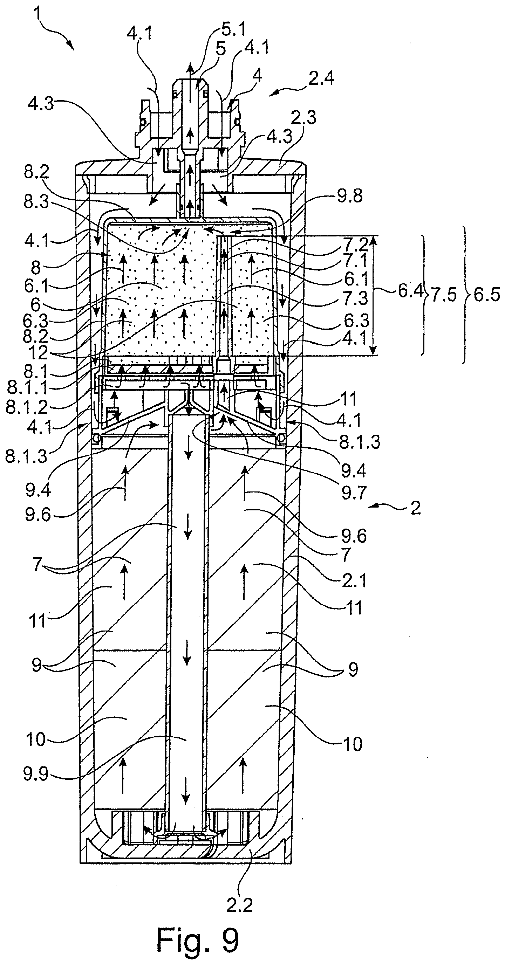

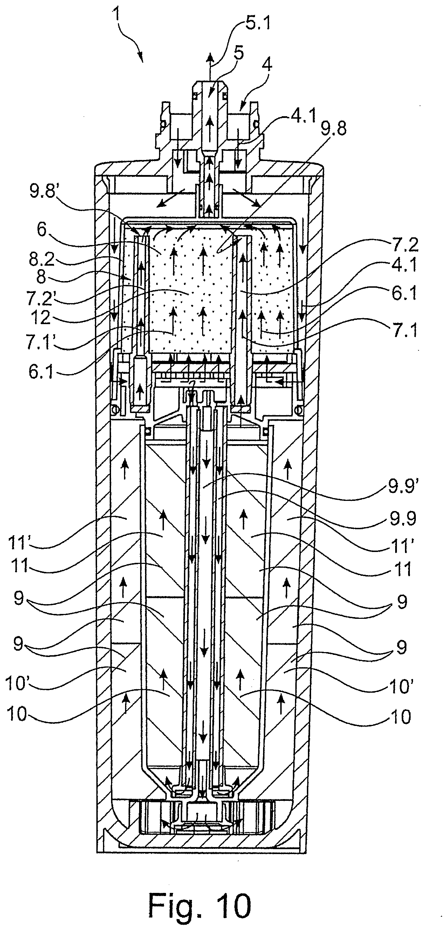

Die **Figuren 9 und 10** zeigen beispielhaft und schematisch zwei weitere Ausführungsformen mit gegenüber den im Druckbetrieb arbeitenden Ausführungen gem. den Fig. 2 bis 8 dahingehend abgewandelten Innenaufbau, dass bei diesen die Granulatschicht, d.h. die Widerstandsstrecke 6.5 des Hauptstrompfades 6, bzw. die Widerstandstrecke 7.5 des Dosierstrompfades 7, von unten nach oben durchströmt wird. Also basierend auf dem Saugprinzip funktionieren. Die gleichen Nummerierungen haben jeweils die gleiche Bedeutung wie bei den bisher beschriebenen Ausführungsformen.

Im Detail zeigt die **Fig. 9** eine leitungsgebundene Wasserfilterkartusche 1 mit einem.Gehäuse 2, umfassend eine Wand 2.1, einen Boden 2.2, einen Deckel 2.3 und einen Hals 2.4.

Auch hier bildet eine Schüttung aus Granulat 6.3 eine Widerstandsstrecke 6.5, die jedoch so unter/in einer Granulatkammerglocke 8.2 angeordnet ist, dass es in betriebsgemäßer Ausrichtung der Filterkartusche 1, mit dem Auslass 5 nach oben gerichtet, von dem gern, der Pfeile 4.1 zuströmenden Wasser von unten nach oben durchströmt wird. Diese Ausführung arbeitet auf der Basis eines Saugprinzips.

Das aufzubereitende Wasser 4.1 gelangt über Einlässe 8.1.3 im Dosierkammerboden 8.1 in eine Verteilkammer 8.1.2 und von dieser, über ein Vlies und/oder ein Gitter 8.1.1 zur Rückhaltung von Partikeln, in die Granulatschicht 6.3.

Lediglich ein kleiner Teil des aufzubereitenden Wassers 4.1 fließt über den Dosierstrom 7. Zuerst nach unten durch ein Zulaufrohr 9.9, von dessen unterem Ende es in die das Salz 10 bevorratende Dosierkammer 9 gelangt und durch lösen des Salzes 10 die dem Hauptstrom 6 zuzudosierende Sole 11 bildet.

Diese Sole 11 steigt, entsprechend der Durchflussmenge durch die Filterkartusche 1 und dem Dosierverhältnis zwischen Haupt- und Dosierstrom, weiter in der Dosierkammer nach oben bis zu deren domartig ausgebildeten Decke und wird an deren höchster Stelle in das strukturell darüber angeordnete aber funktional stromabwärtig der Dosierkammer 9 ausgebildete Dosierrohr 7.2 bis zur Soledosierstelle 9.8 gesaugt.

Das Granulat 6.3 bzw. 7.3 kann in dieser Ausführung eine Filterstufe in der Form einer Schüttung aus Kohle, insbesondere Aktivkohle sein. Geeignet zur Ausbildung einer solchen Widerstandsstrecke 6.5 bzw. 7.5 sind grundsätzlich aber auch andere Granulate.

Diese Filterkartusche entlüftet, im Vergleich zur Ausführungsform mit der von oben beströmten Granulat- bzw. Widerstandsschicht, wesentlich besser und schneller. Insbesondere kann bei der Inbetriebnahme dabei die im Salzbehälter 9 zwischen den Salzkörnern befindliche Luft durch das Dosierrohr 7.2 sehr schnell entweichen, da der Widerstand des Dosierrohrs für Luft klein ist gegenüber dem Widerstand mit Wasser.

Die Solelösung 11 wird direkt aus dem Widerstandsrohr 7.2 der Dosierstrecke 7 in den Hauptstrom 6 des aufzubereitenden Wassers dosiert.

Druckschwankungen im Zulauf führen dabei zu Bewegungen in dem grosszügig dimensionierten Zulaufrohr 9.9 für das Wasser, welches noch zur Sole beim Durchströmen des Behälters wird.

Die Soledosierung selbst bleibt durch das Saugprinzip auch bei äusseren Druckschwankungen nahezu konstant. Bei Druckschwankungen im Zulauf, wie sie bei der Entspannung des gesamten Filters 1 auftreten, z.B. wenn der Wasserdruck vor dem Filter von 2 bar auf 1 bar beim Öffnen eines Hahns zurückgeht und die Blase sich ausdehnt, dehnen sich die eingeschlossene Luftblasen im Salzbehälter 9 aus. Diese Luftblasen verdrängen nur wenig gesättige Sole über das nur schwer zu durchströmende mit Granulat gefüllte Dosierrohr in Richtung Auslass, wo hingegen die meiste Sole zurück in das grosse Fallrohr strömt und dabei keine Erhöhung der Salzfracht im mineralisierten Wasser hervorruft.

Die **Figur 10** zeigt eine ähnliche Ausführungsform wie die Fig. 9, jedoch mit zwei Soledosiervorrichtungen, beispielhaft für mehrere mögliche Soledosiervorrichtungen.

Die Funktionsweisen sind die gleichen, und deshalb gilt auch für gleiche Positionsnummern das gleiche, wie zu Fig. 9 dargelegt. Daher wird aus Vereinfachungsgründen grundlegend auf die obigen Erläuterungen zur Fig. 9 verwiesen.

Nachfolgend werden dementsprechend nur noch die Positionen zu den zusätzlich dargestellten Elementen der zweiten Dosiervorrichtung beschrieben. Die Nummerierungen der betreffenden Elemente der zweiten Soledosiervorrichtung sind dabei mit """ ergänzt.

Diese Ausführung umfasst zwei Dosierkammern 9, 9', die jeweils Salz 10, 10'und Sole 11, 11' enthalten. Diese Solen werden über die beiden Dosierrohre 7.2, 7.2' an die jeweiligen Soledosierstellen 9.8, 9.8' in den Hauptstrom 6 des aufzubereitenden Wassers zudosiert. Vorzugseise sind die Salze unterschiedlich, um z.B. zwei unterschiedliche Mineralien zudosieren zu können. Auch die Dosierverhältnisse können unterschiedliche sein, z.B. abhängig von den jeweils zuzudosieren gewünschten Mengen des betreffenden Salzes.

Bezugszeichenliste

1 Filterkartusche
1.1 Kartuschenlängsachse
2 Gehäuse

    2.1 Wand
    2.2 Boden
    2.3 Deckel
    2.4 Hals

        2.4.1 Fixierelemente
        2.4.2 Außenwandung

3 Schutzkappe
4 Einlass

    4.1 Pfeil
    4.2 Durchlass
    4.3 Ausnehmung

5 Auslass

    5.1 Pfeil
    5.2 Auslassrohr

6 Hauptstrompfad

    6.1 Pfeil
    6.2.2 Querschnittsfläche Hauptstrom
    6.3 Granulat
    6.4 effektive Höhe der Widerstands- bzw. Granulatschicht
    6.5 Widerstandsstrecke

7 Dosierstrompfad

    7.1 Pfeil
    7.2 Dosierrohr

        7.2.1 Zulauf/Einlass in das Dosierrohr
        7.2.2 Querschnittsfläche Dosierstrom

    7.3 Granulat
    7.4 effektive Höhe der Widerstands- bzw. Granulatschicht
    7.5 Widerstandsstrecke

8 Granulatkammer

    8.1.1 Vlies und/oder Gitter
    8.1 Granulatkammerboden
    8.2 Granulatkammerglocke
    8.3 Rückhaltemittel

9 Dosierkammer (auch als Sole- oder Vorratsbehälter bezeichnet)

    9.1 Dosierkammerwand
    9.2 Dosierkammerboden
    9.3 Dosierkammerwand
    9.4 Dosierkammerdeckel
    9.5 Dosierleitung
    9.6 Pfeil
    9.7 Ausgang
    9.8 Dosierstelle für die Salzlösung
    9.9 Zulaufrohr

10 Salz
11 Sole
12 Filter
13 Vorratsbehälter

    13.1 Anschluss
    13.2 Ausgang

**Patentansprüche**

1. Verfahren zum Betrieb einer leitungsgebundenen Wasserfilterkartusche (1) mit einem Gehäuse (2) in der Form eines Druckbehälters, mit einem Einlass (4) und mit einem Auslass (5) für Wasser, **dadurch gekennzeichnet, dass** innerhalb des Druckbehälters ein Hauptstrom (6.1) von Wasser, dem Mineralien zudosiert werden, durch eine Hauptleitung (6) geführt wird

    und ein Dosierstrom (7.1, 9.6) von konzentrierter Salzlösung (11) durch eine Dosierleitung (7.2, 9.5, 9.7) geführt wird,
    wobei die Dosierleitung (7.2) von der Hauptleitung (6) abzweigt
    und durch einen Vorratsbehälter (9) mit konstantem Volumen führt, in dem sich eine konzentrierte Salzlösung (11) aus Sulfatsalz, Chloridsalz und/oder Hydrogencarbonatsalz befindet, wobei der vom Vorratsbehälter (9) abgehende Teil (9.7) der Dosierleitung durch eine Dosieröffnung (9.7; 13.2) mit konstantem Strömungsquerschnitt an einer Dosierstelle (9.8) in den Hauptstrom (6.1) mündet,
    und wobei durch eine, eine Widerstandsstrecke (6.5) ausbildende Schüttung aus einem Granulat (6.3) im Hauptstrom (6.1), welche in Strömungsrichtung vor der Dosierstelle (9.8) angeordnet ist, der Strömungswiderstand im Hauptstrom (6.1), und durch eine separate Widerstandsstrecke (7.5), in der Form einer Widerstandsschicht (7.4), deren Zulauf in die vorangestellte Schüttung ragt, und/oder einer Kapillare, im Dosierstrom (7.1, 9.6) der Strömungswiderstand im Dosierstrom (7.1, 9.6) so eingestellt wird, dass sich ein Differenzdruck zwischen dem Hauptstrom (6.1) und dem Dosierstrom (7.1, 9.6) ergibt, der einen zum Hauptstrom (6) im Wesentlichen proportionalen Volumenstrom des Dosierstroms (7.1, 9.6) der Salzlösung (11; 11') durch die in den Hauptstrom mündende Dosieröffnung (9.7; 13.2) bewirkt.

2. Verfahren nach Anspruch 1, **dadurch gekennzeichnet, dass** in dem Vorratsbehälter (9) ein Salzbett (10) aus Sulfatsalz, Chloridsalz und/oder Hydrogencarbonatsalz liegt und so ein Vorratsvolumen an konzentrierter Salzlösung (11) in Strömungsrichtung hinter dem Salzbett (10) gebildet wird.

3. Verfahren nach Anspruch 1 oder 2, **dadurch gekennzeichnet, dass** die in der Dosierstrecke bzw. im Dosierstrom (7.1, 9.6) gebildete Widerstandsstrecke in der Form einer Schüttung aus einem Granulat (6.3) und/oder aus einer Kapillare gebildet wird, welche vorzugsweise einen Innendurchmesser in einem Bereich von 0,1 bis 0,5 mm aufweist, insbesondere zwischen 0,15 und 0,4 mm.

4. Verfahren nach einem der vorangehenden Ansprüchen, **dadurch gekennzeichnet, dass** der vom Einlass (4) kommende Hauptstrom (6), in betriebsgemäßer Ausrichtung der Wasserfilterkartusche (1), mit nach oben gerichtetem Auslass (5), an die Unterseite der Widerstandsstrecke (6.5) geführt wird, so dass die Widerstandsstrecke (6.5) von unten nach oben durchströmt wird.

5. Verfahren nach einem der vorangehenden Ansprüche, **dadurch gekennzeichnet, dass** mindestens eine konzentrierte Salzlösung (11; 11') von Sulfatsalzen, Chloridsalzen oder Hydrogencarbonatsalzen verwendet wird, deren Löslichkeit mindestens 2 g/l bei 20°C beträgt, vorzugsweise wenigstens 50g/l bei 20°C, insbesondere 740g/l bei 20°C.

6. Verfahren nach einem der vorangehenden Ansprüche, **dadurch gekennzeichnet, dass** die mindestens eine Salzlösung (11; 11') mit einem Volumenanteil von 0.05% bis 2% zum Hauptstrom (6) dosiert wird.

7. Verfahren nach einem der vorangehenden Ansprüche, **dadurch gekennzeichnet, dass** für die Schüttung ein Granulat (6.3; 7.3) mit einer Körnung von 0,1 mm bis 2 mm verwendet wird, die insbesondere eine Mindesterstreckung (6.4; 7.4) von 1 cm in Strömungsrichtung aufweist.

8. Verfahren nach einem der vorangehenden Ansprüche, **dadurch gekennzeichnet, dass** der Leitwert des Wassers zwischen Einlass (4) und Auslass (5) um mindestens 100 pS/cm bis 2000 pS/cm angehoben wird, vorzugsweise um 600 pS/cm.

9. Verfahren nach einem der vorangehenden Ansprüche, **dadurch gekennzeichnet, dass** die Salzlösung (11; 11') zwischen ihrer Austrittsstelle (9.7) aus dem mindesten einen Vorratsbehälter (9) und der Dosierstelle für die Salzlösung (9.8) in den Hauptstrom (6) des Wassers in einem Zwischenspeicher für die Salzlösung (13; 13') zwischengespeichert wird, welcher Zwischenspeicher für die Salzlösung vorzugsweise aus einem flexiblem Material hergestellt und insbesondere in der Betriebsstellung der Wasserfilterkartusche im Wesentlichen horizontal angeordnet ist.

10. Leitungsgebundene Wasserfilterkartusche (1), umfassend ein Gehäuse (2) in der Form eines Druckbehälters, einen Einlass (4) und einen Auslass (5) für Wasser, **dadurch gekennzeichnet, dass**

innerhalb des Druckbehälters eine Hauptleitung (6) zur Führung eines Hauptstroms (6.1) von Wasser, dem Mineralien zudosiert werden soll, und eine Dosierleitung (7.2, 9.5, 9.7) zur Führung eines Dosierstroms (7.1, 9.6) von konzentrierter Salzlösung (11) vorgesehen sind,
wobei die Dosierleitung (7.2, 9.5, 9.7) von der Hauptleitung (6) abzweigt
und einen Vorratsbehälter (9) mit konstantem Volumen umfasst, in dem eine Salzlösung (11) aus Sulfatsalz, Chloridsalz und/oder Hydrogencarbonatsalz vorhanden ist, wobei der vom Vorratsbehälter (9) abgehende Teil (9.7) der Dosierleitung
durch eine Dosieröffnung (9.7) mit konstantem Strömungsquerschnitt an einer Dosierstelle (9.8) mit dem Hauptstrom (6.1) verbunden ist, und wobei eine, eine Widerstandsstrecke (6.5) ausbildende Schüttung aus einem Granulat (6.3) in der Hauptleitung (6) in Strömungsrichtung vor der Dosierstelle (9.8) angeordnet ist, und eine separate Widerstandsstrecke (7.5), in der Form einer Widerstandsschicht (7.4), deren Zulauf in die vorangestellte Schüttung ragt, und/oder einer Kapillare, im Dosierstrom (7.1, 9.6) ausgebildet ist und deren Strömungswiderstand so eingestellt ist, dass sich ein Differenzdruck zwischen dem Hauptstrom (6.1) und dem Dosierstrom (7.1) ergibt, der
einen zum Hauptstrom (6) im Wesentlichen proportionalen Volumenstrom des Dosierstroms (7) der Salzlösung (11; 11') durch die in den Hauptstrom (6) mündende Dosieröffnung (9.8) bewirkt.

11. Leitungsgebundene Wasserfilterkartusche nach Anspruch 10, **dadurch gekennzeichnet, dass** in dem Vorratsbehälter ein Salzbett (10) aus Sulfatsalz, Chloridsalz und/oder Hydrogencarbonatsalz vorhanden ist und so ein Vorratsvolumen an konzentrierter Salzlösung (11) in Strömungsrichtung hinter dem Salzbett (10) vorliegt.

12. Leitungsgebundene Wasserfilterkartusche nach Anspruch 10 oder 11, **dadurch gekennzeichnet, dass** die, die Dosierstrecke bzw. der Dosierstrom (7.1) bildende Widerstandsstrecke (7.4), in der Form einer Schüttung aus einem Granulat (6.3) und/oder einer Kapillare umfasst, welche vorzugsweise einen Innendurchmesser in einem Bereich von 0,1 bis 0,5 mm aufweist, insbesondere zwischen 0,17 und 0,35 mm.

13. Leitungsgebundene Wasserfilterkartusche nach einem der Ansprüche 10 bis 12, **dadurch gekennzeichnet, dass** der Zwischenspeicher für die Salzlösung (13; 13') ein Schlauch ist, welcher vorzugsweise ein Füllvolumen von 0,05 ml bis 0,3 ml aufweist.

14. Leitungsgebundene Wasserfilterkartusche nach dem Anspruch 13, **dadurch gekennzeichnet, dass** der Schlauch 5 cm bis 30 cm lang ist und einen Durchmesser von 0,5 bis 3 mm aufweist.

15. Leitungsgebundene Wasserfilterkartusche nach einem der Ansprüche 10 bis 14, **dadurch gekennzeichnet, dass** die Widerstandsstrecke (7.5) des Dosierstroms (7) und die Widerstandsstrecke (6.5) des Hauptstroms (6) aus dem selben Granulat (6.3; 7.3) bestehen.

**Claims**

1. Method for operating a mains-fitted water filter cartridge (1) having a housing (2) in the form of a pressure vessel, having an inlet (4) and having an outlet (5) for water, **characterized in that**

inside the pressure vessel a main flow (6.1) of water, to which minerals are added, is conducted through a main conduit (6)
and a dosing flow (7.1, 9.6) of concentrated salt solution (11) is conducted through a dosing conduit (7.2, 9.5, 9.7),
wherein the dosing conduit (7.2) branches off from the main conduit (6)
and leads through a storage vessel (9) of constant volume which contains a concentrated salt solution (11) formed of sulfate salt, chloride salt and/or hydrogencarbonate salt, wherein the part (9.7) of the dosing conduit departing from the storage vessel (9) opens into the main flow (6.1) at a dosing point (9.8) via a dosing opening (9.7;

13.2) having a constant flow cross section, and wherein the flow resistance in the main flow (6.1) is set by means of a bed of a granular material (6.3) forming a resistance section (6.5) in the main flow (6.1), which is arranged upstream of the dosing point (9.8) in the direction of flow, and the flow resistance in the dosing flow (7.1, 9.6) is set by means of a separate resistance section (7.5), in the form of a resistance layer (7.4), the feed of which projects into the preceding bed, and/or of a capillary, in the dosing flow (7.1, 9.6), such that a differential pressure arises between the main flow (6.1) and the dosing flow (7.1, 9.6), this differential pressure bringing about a volume flow of the dosing flow (7.1, 9.6) of the salt solution (11; 11'), through the dosing opening (9.7; 13.2) that opens into the main flow, which is substantially proportional to the main flow (6).

2. Method according to Claim 1, **characterized in that** the storage vessel (9) contains a salt bed (10) formed of sulfate salt, chloride salt and/or hydrogencarbonate salt and hence a storage volume of concentrated salt solution (11) is formed downstream of the salt bed (10) in the direction of flow.

3. Method according to Claim 1 or 2, **characterized in that** the resistance section formed in the dosing section or in the dosing flow (7.1, 9.6) is formed in the form of a bed of a granular material (6.3) and/or of a capillary, which preferably has an internal diameter in a range from 0.1 to 0.5 mm, in particular between 0.15 and 0.4 mm.

4. Method according to any of the preceding claims, **characterized in that**, with the water filter cartridge (1) in the operational orientation, with the outlet (5) directed upwards, the main flow (6) coming from the inlet (4) is conducted to the underside of the resistance section (6.5) so that it flows through the resistance section (6.5) from bottom to top.

5. Method according to any of the preceding claims, **characterized in that** at least one concentrated salt solution (11; 11') of sulfate salts, chloride salts or hydrogencarbonate salts is used, the solubility of these being at least 2 g/l at 20°C, preferably at least 50 g/l at 20°C, especially 740 g/l at 20°C.

6. Method according to any of the preceding claims, **characterized in that** the at least one salt solution (11; 11') is dosed at a proportion by volume of 0.05% to 2% to the main flow (6).

7. Method according to any of the preceding claims, **characterized in that** a granular material (6.3; 7.3) with a particle size of 0.1 mm to 2 mm is used for the bed which in particular has a minimum extent (6.4; 7.4) of 1 cm in the direction of flow.

8. Method according to any of the preceding claims, **characterized in that** the conductance of the water between the inlet (4) and outlet (5) is raised by at least 100 pS/cm to 2000 pS/cm, preferably by 600 pS/cm.

9. Method according to any of the preceding claims, **characterized in that** the salt solution (11; 11') is temporarily stored in a temporary store for the salt solution (13; 13') between its exit point (9.7) from the at least one storage vessel (9) and the dosing point for the salt solution (9.8) into the main flow (6) of the water, which temporary store for the salt solution is preferably made from a flexible material and in particular is arranged substantially horizontally in the operational position of the water filter cartridge.

10. Mains-fitted water filter cartridge (1), comprising a housing (2) in the form of a pressure vessel, an inlet (4) and an outlet (5) for water, **characterized in that**

provided inside the pressure vessel are a main conduit (6) for conducting a main flow (6.1) of water, to which minerals are intended to be added, and a dosing conduit (7.2, 9.5, 9.7) for conducting a dosing flow (7.1, 9.6) of concentrated salt solution (11),
wherein the dosing conduit (7.2, 9.5, 9.7) branches off from the main conduit (6) and comprises a storage vessel (9) of constant volume which contains a salt solution (11) formed of sulfate salt, chloride salt and/or hydrogencarbonate salt, wherein the part (9.7) of the dosing conduit departing from the storage vessel (9) is connected to the main flow (6.1) at a dosing point (9.8) via a dosing opening (9.7) having a constant flow cross section,
and wherein a bed of a granular material (6.3) forming a resistance section (6.5) is arranged in the main conduit (6) upstream of the dosing point (9.8) in the direction of flow, and a separate resistance section (7.5), in the form of a resistance layer (7.4), the feed of which projects into the preceding bed, and/or of a capillary, is formed in the dosing flow (7.1, 9.6), and the flow resistance thereof is set such that a differential pressure arises between the main flow (6.1) and the dosing flow (7.1), this differential pressure bringing about a volume flow of the dosing flow (7) of the salt solution (11; 11'), through the dosing opening (9.8) that opens into the main flow (6), which is substantially proportional to the main flow (6).

**11.** Mains-fitted water filter cartridge according to Claim 10, **characterized in that** the storage vessel contains a salt bed (10) formed of sulfate salt, chloride salt and/or hydrogencarbonate salt and hence a storage volume of concentrated salt solution (11) is present downstream of the salt bed (10) in the direction of flow.

**12.** Mains-fitted water filter cartridge according to Claim 10 or 11, **characterized in that** the resistance section (7.4) forming the dosing section or the dosing flow (7.1) comprises in the form of a bed of a granular material (6.3) and/or of a capillary, which preferably has an internal diameter in a range from 0.1 to 0.5 mm, in particular between 0.17 and 0.35 mm.

**13.** Mains-fitted water filter cartridge according to any of Claims 10 to 12, **characterized in that** the temporary store for the salt solution (13; 13') is a hose which preferably has a filling volume of 0.05 ml to 0.3 ml.

**14.** Mains-fitted water filter cartridge according to Claim 13, **characterized in that** the hose is 5 cm to 30 cm long and has a diameter of 0.5 to 3 mm.

**15.** Mains-fitted water filter cartridge according to any of Claims 10 to 14, **characterized in that** the resistance section (7.5) of the dosing flow (7) and the resistance section (6.5) of the main flow (6) are composed of the same granular material (6.3; 7.3).

**Revendications**

**1.** Procédé d'exploitation d'une cartouche de filtration d'eau (1) reliée au réseau, avec un boîtier (2) sous la forme d'un réservoir sous pression, avec une entrée (4) et avec une sortie (5) pour l'eau, **caractérisé en ce qu'**à l'intérieur du réservoir sous pression, un courant principal (6.1) d'eau à laquelle des minéraux sont ajoutés de manière dosée est acheminé à travers une conduite principale (6)

> et un courant de dosage (7.1, 9.6) de solution saline concentrée (11) est acheminé à travers une conduite de dosage (7.2, 9.5, 9.7), la conduite de dosage (7.2) bifurquant à partir de la conduite principale (6), et étant acheminée à travers un réservoir de stockage (9) de volume constant dans lequel se trouve une solution saline concentrée (11) de sel de sulfate, de sel de chlorure et/ou de sel d'hydrogénocarbonate, la partie (9.7) de la conduite de dosage qui part du réservoir de stockage (9) débouchant à travers une ouverture de dosage (9.7 ; 13.2) de section transversale d'écoulement constante dans le courant principal (6.1) au niveau d'un point de dosage (9.8), et la résistance à l'écoulement dans le courant principal (6.1) étant ajustée par un garnissage en un granulat (6.3) formant une section de résistance (6.5) dans le courant principal (6.1), qui est agencé avant le point de dosage (9.8) dans la direction de l'écoulement, et la résistance à l'écoulement dans le courant de dosage (7.1, 9.6) étant ajustée dans le courant de dosage (7.1, 9.6) par une section de résistance séparée (7.5), sous la forme d'une couche de résistance (7.4), dont l'entrée fait saillie dans le garnissage placé en amont, et/ou d'un capillaire, de telle sorte qu'il en résulte une pression différentielle entre le courant principal (6.1) et le courant de dosage (7.1, 9.6), qui provoque un débit volumique du courant de dosage (7.1, 9.6) de la solution saline (11; 11') essentiellement proportionnel au courant principal (6) à travers l'ouverture de dosage (9.7 ; 13.2) débouchant dans le courant principal.

**2.** Procédé selon la revendication 1, **caractérisé en ce qu'**un lit de sel (10) de sel de sulfate, de sel de chlorure et/ou de sel d'hydrogénocarbonate est situé dans le réservoir de stockage (9) et un volume de stockage de solution saline concentrée (11) est ainsi formé après le lit de sel (10) dans la direction de l'écoulement.

**3.** Procédé selon la revendication 1 ou 2, **caractérisé en ce que** la section de résistance formée dans la section de dosage ou dans le courant de dosage (7.1, 9.6) est formée sous la forme d'un garnissage en un granulat (6.3) et/ou en un capillaire, qui présente de préférence un diamètre intérieur dans une plage de 0,1 à 0,5 mm, notamment entre 0,15 et 0,4 mm.

**4.** Procédé selon l'une quelconque des revendications précédentes, **caractérisé en ce que** le courant principal (6) provenant de l'entrée (4), dans l'orientation de fonctionnement de la cartouche de filtration d'eau (1), avec la sortie (5) dirigée vers le haut, est acheminé vers le côté inférieur de la section de résistance (6.5), de telle sorte que la section de résistance (6.5) est traversée de bas en haut.

**5.** Procédé selon l'une quelconque des revendications précédentes, **caractérisé en ce qu'**au moins une solution saline concentrée (11 ; 11') de sels de sulfate, de sels de chlorure ou de sels d'hydrogénocarbonate est utilisée, dont la solubilité est d'au moins 2 g/l à 20 °C, de préférence d'au moins 50 g/l à 20 °C, notamment de 740 g/l à 20 °C.

**6.** Procédé selon l'une quelconque des revendications précédentes, **caractérisé en ce que** l'au moins une solution saline (11 ; 11') est ajoutée de manière dosée au courant principal (6) en une proportion volumique de 0,05 % à 2 %.

7. Procédé selon l'une quelconque des revendications précédentes, **caractérisé en ce que**, pour le garnissage, un granulat (6.3 ; 7.3) d'une granulométrie de 0,1 mm à 2 mm est utilisé, qui présente notamment une extension minimale (6.4 ; 7.4) de 1 cm dans la direction de l'écoulement.

8. Procédé selon l'une quelconque des revendications précédentes, **caractérisé en ce que** la conductance de l'eau entre l'entrée (4) et la sortie (5) est augmentée d'au moins 100 μS/cm à 2 000 μS/cm, de préférence de 600 μS/cm.

9. Procédé selon l'une quelconque des revendications précédentes, **caractérisé en ce que** la solution saline (11 ; 11') est entreposée dans un réservoir intermédiaire pour la solution saline (13 ; 13') entre son point de sortie (9.7) de l'au moins un réservoir de stockage (9) et le point de dosage pour la solution saline (9.8) dans le courant principal (6) de l'eau, lequel réservoir intermédiaire pour la solution saline est de préférence fabriqué en un matériau flexible et est agencé essentiellement horizontalement, notamment dans la position de fonctionnement de la cartouche de filtration d'eau.

10. Cartouche de filtration d'eau reliée au réseau (1), comprenant un boîtier (2) sous la forme d'un réservoir sous pression, une entrée (4) et une sortie (5) pour l'eau, **caractérisée en ce qu'**à l'intérieur du réservoir sous pression, une conduite principale (6) pour l'acheminement d'un courant principal (6.1) d'eau à laquelle des minéraux doivent être ajoutés de manière dosée,

et une conduite de dosage (7.2, 9.5, 9.7) pour l'acheminement d'un courant de dosage (7.1, 9.6) de solution saline concentrée (11) sont prévues,
la conduite de dosage (7.2, 9.5, 9.7) bifurquant à partir de la conduite principale (6)
et comprenant un réservoir de stockage (9) de volume constant dans lequel est présente une solution saline (11) de sel de sulfate, de sel de chlorure et/ou de sel d'hydrogénocarbonate,
la partie (9.7) de la conduite de dosage (7.2, 9.5, 9.7) qui part du réservoir de stockage (9) étant reliée au courant principal (6.1) par une ouverture de dosage (9.7) de section transversale d'écoulement constante au niveau d'un point de dosage (9.8),
et un garnissage en un granulat (6.3) formant une section de résistance (6.5) étant agencé dans la conduite principale (6) avant le point de dosage (9.8) dans la direction de l'écoulement, et une section de résistance séparée (7.5), sous la forme d'une couche de résistance (7.4), dont l'entrée fait saillie dans le garnissage placé en amont, et/ou d'un capillaire, étant formée dans le courant de dosage (7.1, 9.6) et dont la résistance à l'écoulement est ajustée de telle sorte qu'il en résulte une pression différentielle entre le courant principal (6.1) et le courant de dosage (7.1), qui provoque un débit volumique du courant de dosage (7) de la solution saline (11; 11') essentiellement proportionnel au courant principal (6) à travers l'ouverture de dosage (9.8) débouchant dans le courant principal (6).

11. Cartouche de filtration d'eau reliée au réseau selon la revendication 10, **caractérisée en ce qu'**un lit de sel (10) de sel de sulfate, de sel de chlorure et/ou de sel d'hydrogénocarbonate est présent dans le réservoir de stockage et un volume de stockage de solution saline concentrée (11) est ainsi présent après le lit de sel (10) dans la direction de l'écoulement.

12. Cartouche de filtration d'eau reliée au réseau selon la revendication 10 ou 11, **caractérisée en ce que** la section de résistance (7.4) formant la section de dosage ou le courant de dosage (7.1) comprend un garnissage en un granulat (6.3) et/ou un capillaire, qui présente de préférence un diamètre intérieur dans une plage de 0,1 à 0,5 mm, notamment entre 0,17 et 0,35 mm.

13. Cartouche de filtration d'eau reliée au réseau selon l'une quelconque des revendications 10 à 12, **caractérisée en ce que** le réservoir intermédiaire pour la solution saline (13 ; 13') est un tuyau qui présente de préférence un volume de remplissage de 0,05 ml à 0,3 ml.

14. Cartouche de filtration d'eau reliée au réseau selon la revendication 13, **caractérisée en ce que** le tuyau a une longueur de 5 cm à 30 cm et un diamètre de 0,5 à 3 mm.

15. Cartouche de filtration d'eau en ligne selon l'une quelconque des revendications 10 à 14, **caractérisée en ce que** la section de résistance (7.5) du courant de dosage (7) et la section de résistance (6.5) du courant principal (6) sont constituées du même granulat (6.3 ; 7.3).

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012163392 A2
- WO 2019038622 A1
- JP H11319855 A